**Europäisches Patentamt**

**European Patent Office**

**Office européen des brevets**

(11) Veröffentlichungsnummer: **0 280 960 B1**

(12) **EUROPÄISCHE PATENTSCHRIFT**

(45) Veröffentlichungstag der Patentschrift: **11.09.91**

(51) Int. Cl.⁵: **F16J 1/08**, F02F 3/00, F16J 9/20

(21) Anmeldenummer: **88102287.5**

(22) Anmeldetag: **17.02.88**

(54) **Kolben für Brennkraftmaschinen.**

(30) Priorität: **04.03.87 DE 3706940**

(43) Veröffentlichungstag der Anmeldung:
**07.09.88 Patentblatt 88/36**

(45) Bekanntmachung des Hinweises auf die
Patenterteilung:
**11.09.91 Patentblatt 91/37**

(84) Benannte Vertragsstaaten:
**AT DE ES FR GB IT NL SE**

(56) Entgegenhaltungen:
**DE-C- 550 963**
**US-A- 1 664 507**
**US-A- 1 864 384**

(73) Patentinhaber: **ALCAN DEUTSCHLAND GMBH**
**Hannoversche Strasse 2**
**W-3400 Göttingen(DE)**

(72) Erfinder: **Obermeier-Wagner, Karl Heinz**
**Müllnerstrasse 30**
**W-8500 Nürnberg(DE)**
Erfinder: **Martin, Edgar**
**Bierweg 94**
**W-8500 Nürnberg(DE)**
Erfinder: **Böhm, Gerhard**
**Bachwiesenstrasse 28**
**W-8501 Rosstal(DE)**

(74) Vertreter: **Eitle, Werner, Dipl.-Ing. et al**
**Hoffmann, Eitle & Partner Patentanwälte Arabellastrasse 4**
**W-8000 München 81(DE)**

## Beschreibung

Die Erfindung betrifft einen Kolben für Brennkraftmaschinen mit einem in einer am Umfang seines Kopfteiles befindlichen Ringnut liegenden Ölabstreifring, wobei diejenige Außenkante der Ringnut, die dem an den Kopfteil des Kolbens anschließenden Kolbenschaft benachbart ist, unter Bildung einer Fase zum Kolbenschaft hin abgeschrägt ist.

Bei Kolben, insbesondere Kolben für Brennkraftmaschinen, besteht das Problem, daß ein Schmiermittelmangel auf den Kolbenlaufflächen zu Trockenlauf führt, wodurch es auf diesen Laufflächen zu Freßerscheinungen kommen kann. Besonders die Gegendruckseite des Kolbens ist hiervon gefährdet, da beim Arbeits- und/oder Ansaugtakt des Kolbens, bei welchem dieser an seiner Druckseite anliegt, die Kolbenringe auf seiner Gegendruckseite radial über die Kolbenkontur vorstehend federnd gegen die Zylinderwand der Brennkraftmaschine abdichten und dabei den Ölfilm auf der Gegendruckseite weitgehend abstreifen. Beim anschließenden Verdichtungs- und/oder Ausschubtakt wird der Kolben dann gegen die schwach beölte Zylinderwandfläche der Gegendruckseite gedrückt, wobei der weitgehend abgestreifte Ölfilm durchschlagen werden kann, so daß es zu den genannten Freßerscheinungen kommt. Die Druckseite des Kolbens wird hingegen besser mit Öl versorgt, weil wegen der Ölbewegung in der Brennkraftmaschine infolge der Drehung der Kurbelwelle Öl bevorzugt auf die der Kolbendruckseite gegenüberliegende Zylinderwand geschleudert wird und der Kolbenschaft beim Abwärtshub immer in eine gut mit Öl benetzte Zylinderlauffläche hineingleitet. Dagegen liegt der Kolben im Aufwärtshub mit seiner Gegendruckseite an der vom Öl durch die Abstreifwirkung der Kolbenringe befreiten Zylinderwand an.

Um einen ausreichenden Ölfilm an den Laufflächen des Kolbens bzw. der gegenüberliegenden Zylinderwand zu erzeugen, hat man bisher folgende Maßnahmen vorgesehen:
a) Man hat die Kolbenschaftrauhigkeit erhöht und damit den Traganteil des Kolbenschaftes verringert. Dies hat jedoch den Nachteil, daß am Kolbenhemd durch rasches Abschleifen der Drehpaßspitzen ein hoher Verschleiß eintritt.
b) Man hat die Abstreifwirkung der Ölabstreifringe verringert. Dies führt jedoch zu einem hohen Ölverbrauch und damit zu einer hohen Verbrennung von Öl in der Brennkraftmaschine mit der Folge der Bildung von Ölkohle im Zylinder.
c) Man hat an den Kanten der den Ölabstreifring aufnehmenden Ringnut oder an der unteren Kante eines unterhalb des Kolbenringbereichs umlaufenden Schlitzes im Kolbenschaft breite Fasen angeordnet, um dadurch zwischen dieser Fase und der gegenüberliegenden Zylinderwand einen Raum für ein ausreichendes Ölreservoir zu erhalten (z.B. US-A-1 664 507 und US-A-1 864 384). Hierdurch wird jedoch der Traganteil des Kolbenschaftes verkleinert, wodurch sich dessen Flächenpressung erhöht. Dies kann auf der Druckseite des Kolbens zum Durchschlagen des Ölfilms und damit zum Trockenlauf des Kolbens führen.

Der Erfindung liegt daher die Aufgabe zugrunde, einen Kolben der eingangs genannten Gattung derart auszubilden, daß die vorgenannten Nachteile nicht gegeben sind, d.h. daß die Aufrechterhaltung eines zur Verhinderung des Trockenlaufes ausreichenden Ölfilms gesichert ist. Dies wird erfindungsgemäß dadurch erreicht, daß bei diesem Kolben die Breite der Fase an der dem Kolbenschaft benachbarten Außenkante der den Ölabstreifring aufnehmenden Ringnut an der Gegendruckseite des Kolbens größer ist als an der Druckseite des Kolbens. Hierdurch entsteht an der Gegendruckseite des Kolbens ein größerer Raum zwischen dieser Fase und der gegenüberliegenden Zylinderwand als auf der Druckseite des Kolbens, so daß sich an der Gegendruckseite ein größeres Ölreservoir bildet als an der Druckseite. Dieses größere Ölreservoir kann durch entsprechende Wahl der Fasenbreite, abhängig vom Hub und vom Durchmesser des Kolbens, so gewählt werden, daß es für eine ausreichende Beölung der Lauffläche des Kolbens bzw. der gegenüberliegenden Zylinderwand über den gesamten Kolbenhub ausreicht. Auf diese weise kann ein Ölstau ebenso verhindert werden wie eine Unterversorgung mit Öl. Die geringere Breite der Fase an der Druckseite des Kolbens bewirkt, daß ein Abfließen des Öls von der Gegendruckseite verhindert wird, wodurch ein Durchschlagen des Ölfilmes an der Zylinderwand durch den Kolben auf seiner Gegendruckseite vermieden wird. Besonders im kalten Zustand der Brennkraftmaschine macht sich hierdurch eine Geräuschdämpfung bemerkbar.

Dadurch, daß die breite Fase nicht wie beim bekannten Stand der Technik über den gesamten Kolbenumfang, sondern nur oder hauptsächlich nur im Bereich der Gegendruckseite des Kolbens angeordnet ist, wo wegen schlechter Ölversorgung ein größeres Ölreservoir benötigt wird, ist bei dem erfindungsgemäßen Kolben an seiner kritischen Seite ein ausreichender Ölfilm sichergestellt, ohne daß der druckseitige Tragbereich des Kolbens nennenswert verkleinert wird mit der Folge einer erhöhten Flächenpressung und der Gefahr, daß der Ölfilm dort durchschlagen wird.

Zweckmäßige Weiterbildungen des erfindungsgemäßen Kolbens ergeben sich aus den Unteransprüchen.

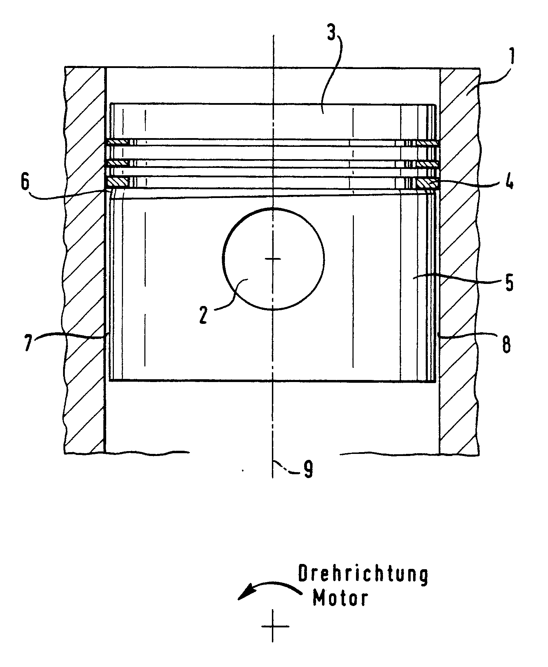

In der Zeichnung ist ein besonders zweckmäßiges Ausführungsbeispiel des erfindungsgemäßen Kolbens dargestellt, wobei der Kolben in einem im Schnitt gezeichneten Zylinder 1 in Seitenansicht auf eine Kolbenbolzenbohrung 2 dargestellt ist. In seinem Kopfteil 3 besitzt dieser Kolben drei übereinander angeordnete Ringnuten, deren beide oberen je einen Verdichtungsring und deren unterste einen Ölabstreifring 4 aufnehmen. Die dem Kolbenschaft 5 zugewandte Außenkante der untersten Ringnut ist unter Bildung einer Fase 6 abgeschrägt. Diese Fase ist auf der Gegendruckseite 7 des Kolbens größer als auf der Druckseite 8 des Kolbens. Die Breite der Fase nimmt von der Gegendruckseite zur Druckseite hin kontinuierlich ab, wobei sich ihre Fläche in einem Winkel von etwa 10° bis 30° zur Kolbenachse 9 erstreckt. Die Fasenbreite kann auch an einer Stelle zwischen Gegendruckseite und Druckseite stufenförmig zur Druckseite hin verengt sein.

Die Druckseite und Gegendruckseite sind abhängig von der Drehrichtung der Kurbelwelle, die in der Zeichnung unten mit Pfeil dargestellt ist.

## Patentansprüche

1. Kolben für Brennkraftmaschinen mit einem am Umfang seines Kopfteils (3) in einer Ringnut liegenden Ölabstreifring (4), wobei die dem an den Kopfteil (3) anschließenden Kolbenschaft (5) benachbarte Außenkante der Ringnut unter Bildung einer Fase (6) abgeschrägt ist, **dadurch gekennzeichnet,** daß die Breite der sich über den gesamten Kolbenumfang erstreckenden Fase (6) an der Gegendruckseite (7) des Kolbens größer ist als an der Druckseite (8) des Kolbens.

2. Kolben nach Anspruch 1, dadurch gekennzeichnet, daß die Breite der Fase (6) von der Gegendruckseite (7) des Kolbens zur Druckseite (8) des Kolbens hin im wesentlichen kontinuierlich abnimmt.

3. Kolben nach Anspruch 1, dadurch gekennzeichnet, daß die Breite der Fase (6) zur Druckseite (8) des Kolbens hin stufenförmig verengt ist.

4. Kolben nach Anspruch 1, dadurch gekennzeichnet, daß die Fasenfläche in einem Winkel von 10 bis 30° zur Kolbenachse (9) steht.

5. Kolben nach Anspruch 1, dadurch gekennzeichnet, daß die kegelringförmige Fasenfläche zur Außenkontur des Kolbenkopfteils (3) einen Mittenversatz von 0,05 bis 0,3 mm, vorzugsweise 0,15 bis 0,2 mm, hat.

6. Kolben nach Anspruch 1, dadurch gekennzeichnet, daß das Verhältnis der Fasenbreite auf der Gegendruckseite (7) zur Fasenbreite auf der Druckseite (8) 1 : 2,4 bis 1 : 12, vorzugsweise 1 : 5, beträgt.

7. Kolben nach Anspruch 1, dadurch gekennzeichnet, daß die Breite der Fase (6) auf der Druckseite 0,5 bis 2,5 % und auf der Gegendruckseite 1,5 bis 6 % des Kolbendurchmessers beträgt.

## Claims

1. Piston for internal combustion engines having an oil wiping ring (4) lying in an annular groove on the periphery of its head portion (3), with the outer edge of the annular groove which is adjacent to the piston shaft (5) adjoining the head portion (3) being chamfered to form a bevel (6),
**characterised in that**
the width of the bevel (6) extending over the entire periphery of the piston is greater at the counterpressure end (7) of the piston than at the pressure end (8) of the piston.

2. Piston according to claim 1, characterised in that the width of the bevel (6) decreases substantially continuously from the counter-pressure end (7) of the piston towards the pressure side (8) of the piston.

3. Piston according to claim 1, characterised in that the width of the bevel (6) is narrowed in steps towards the pressure end (8) of the piston.

4. Piston according to claim 1, characterised in that the bevel surface area is at an angle of 10 to 30° to the piston axis (9).

5. Piston according to claim 1, characterised in that the tapered ring-shaped bevel surface area has a centre offset of 0.05 to 0.3 mm, preferably 0.15 to 0.2 mm, relative to the outer contour of the piston head portion (3).

6. Piston according to claim 1, characterised in that the ratio of the bevel width at the counter-pressure end (7) to the bevel width at the pressure end (8) is 1 : 2.4 to 1 : 12, preferably 1 : 5.

7. Piston according to claim 1, characterised in that the width of the bevel (6) at the pressure side is 0.5 to 2.5 and at the counter-pressure end is 1.5 to 6% of the piston diameter.

## Revendications

1. Piston pour moteurs à combustion interne, comportant une bague (4) de raclage d'huile engagée dans une gorge située sur le pourtour de sa partie de tête (3), le bord extérieur de la gorge, qui est adjacent au corps de piston (5) situé à la suite de sa partie de tête (3),étant chanfreiné en formant un biseau (6) avec le corps de piston, caractérisé en ce que la largeur du biseau (6), s'étendant sur tout le pourtour du piston, est plus grande sur le côté en contre-pression (7 ) du piston que sur le côté en pression (8) du piston.

2. Piston selon la revendication 1, caractérisé en ce que la largeur du biseau (6) décroît de façon sensiblement continue du côté en contre-pression (7) du piston vers le côté en pression (8) du piston.

3. Piston selon la revendication 1, caractérisé en ce que la largeur du biseau (6) est réduite en forme de gradin vers le côté en pression (8) du piston.

4. Piston selon la revendication 1, caractérisé en ce que la surface de biseau fait un angle compris entre 10 et 30° avec l'axe de piston (9).

5. Piston selon la revendication 1, caractérisé en ce que la surface de biseau, en forme d'anneau conique, est décalée par rapport au contour extérieur de la partie de tête (3) du piston d'une distance moyenne de 0,05 à 0,3 mm, de préférence de 0,15 à 0,2 mm.

6. Piston selon la revendication 1, caractérisé en ce que le rapport de la largeur du biseau sur le côté en contre-pression (7) à la largeur du biseau sur le côté en pression (8) est compris entre 1 : 2.4 et 1 : 12 en étant de préférence de 1 : 5.

7. Piston selon la revendication 1, caractérisé en ce que la largeur du biseau (6) est comprise entre 0,5 et 2,5 % du diamètre de piston sur le côté en pression et entre 1,5 et 6 % du diamètre de piston sur le côté en contre-pression.

Drehrichtung
Motor